# EUROPÄISCHE PATENTSCHRIFT

(11) **EP 4 508 501 B1**
(45) Veröffentlichungstag und Bekanntmachung des Hinweises auf die Patenterteilung: **11.02.2026**
(21) Anmeldenummer: 23711049.9
(22) Anmeldetag: 13.03.2023
(51) Int. Cl.: G05D 1/00

(54) **MOBILES ASSISTENZSYSTEM ZUM BETRIEB IN EINER TECHNISCHEN ANLAGE**
MOBILE ASSISTANCE SYSTEM TO BE OPERATED IN A TECHNICAL PLANT
SYSTÈME D'ASSISTANCE MOBILE DESTINÉ À FONCTIONNER DANS UNE INSTALLATION TECHNIQUE

(30) Priorität: 11.04.2022 DE 102022001234
(43) Veröffentlichungstag der Anmeldung: 19.02.2025
(73) Patentinhaber: SEW-EURODRIVE GmbH & Co. KG, 76646 Bruchsal (DE)
(72) Erfinder: SCHMIDT, Josef, 76661 Philippsburg - Huttenheim (DE)
(86) Internationale Anmeldenummer: PCT/EP2023/056388
(87) Internationale Veröffentlichungsnummer: WO 2023/198380

(56) Entgegenhaltungen:
- CN-A- 109 869 799
- KR-A- 20130 123 753
- KR-B1- 102 174 201

## Beschreibung

Die Erfindung betrifft ein mobiles Assistenzsystem zum Betrieb in einer technischen Anlage, welches eine Antriebseinrichtung zur Bewegung des mobilen Assistenzsystems in der technischen Anlage, eine Steuereinheit zur Steuerung der Antriebseinrichtung und eine Kommunikationseinheit zur drahtlosen Kommunikation umfasst.

Bei einer gattungsgemäßen technischen Anlage handelt es sich insbesondere um eine industrielle Anwendung, beispielsweise ein Produktionswerk, eine Industriehalle oder ein Logistikzentrum. Bei dem mobilen Assistenzsystem handelt es sich beispielsweise um ein autonomes Fahrzeug.

Aus dem Dokument DE 10 2021 002 054 A1 sind eine technische Anlage sowie ein Verfahren zum Betreiben einer technischen Anlage bekannt. Die technische Anlage ist dabei als Montagewerk ausgestaltet und weist eine Mehrzahl von Ladungsträgern zum Transport von Waren und Produkten auf. Die Ladungsträger weisen jeweils eine Steuerung, einen mit der Steuerung verbundenen Antrieb und eine Kommunikationsschnittstelle auf.

Aus dem Dokument DE 10 2021 001 015 A1 sind ein Verfahren zum Betreiben einer technischen Anlage und eine technische Anlage bekannt. Die technische Anlage ist beispielsweise ein Produktionswerk und umfasst mehrere mobile Assistenzsysteme, welche als autonom fahrende Fahrzeuge ausgebildet sind.

Aus der DE 10 2020 122 809 A1 ist eine Bearbeitungsmaschine zur Bearbeitung von Werkstücken bekannt. Die Bearbeitungsmaschine umfasst eine Bearbeitungseinheit zum Ausführen einer Werkstückbearbeitung, einen Auflagetisch zum Auflegen zu bearbeitender Werkstücke, einen Assistenzroboter und ein Fortbewegungsmittel.

Aus der WO 2017/036461 A1 ist eine mobile Kommunikationseinrichtung, insbesondere Mobilfunktelefon, mit einem Anzeigemittel, mit Eingabemitteln, einer Fahrzeugkonnektierungs-Schnittstelle für eine Verbindung zu einem Fahrzeug und einer Infrastruktur-Schnittstelle für eine Verbindung zu einem Bauwerk bekannt.

Aus der DE 10 2017 211 057 A1 sind eine mobile Robotereinheit für ein Kraftfahrzeug und ein Kraftfahrzeug bekannt. Die mobile Robotereinheit umfasst ein Fortbewegungsmittel, einen Antrieb, eine Energiespeichereinheit und eine Steuervorrichtung.

Aus der WO 2022/242834 A1 ist ein Erfassungsgerät für ein Warenwirtschaftssystem bekannt. Das Erfassungsgerät weist einen Sensor zum Erfassen einer Produktpräsentationsvorrichtung und eine Bewegungsvorrichtung auf.

Aus der DE 10 2020 130 236 B4 sind ein unbemanntes Luftfahrzeug und ein betreffendes Luftfahrzeug-System bekannt. Das Lustfahrzeug weist eine Sensoreinrichtung und eine Sende- und Empfangseinheit auf.

Aus der DE 10 2021 205 311 A1 ist ein Kraftfahrzeug mit einem Assistenzsystem bekannt, das einen optischen Sensor umfasst. Der optische Sensor weist einen Erfassungsbereich auf und umfasst eine 3D-Kamera.

Aus der CN 109869799 A ist ein mobiles Fahrzeug bekannt, welches ein Heizgerät aufweist. Das Heizgerät wird von dem Fahrzeug zu einem Benutzer gebracht.

Aus der KR 10-2174201 B1 ist ein Infrarot-Heizgerät bekannt.

Aus der KR 10-2013-0123753A sind eine Vorrichtung und ein Verfahren zum Trocknen von Farbe bekannt.

In einer gattungsgemäßen technischen Anlage werden Produkte weitgehend automatisiert produziert und transportiert. Produktionsmaschinen und autonome Transportfahrzeuge in einer solchen technischen Anlage arbeiten weitgehend autark. Es halten sich nur wenige Menschen sporadisch in einer solchen technische Anlage auf, beispielsweise zur Wartung oder Reparatur von Maschinen.

Der Erfindung liegt die Aufgabe zugrunde, ein mobiles Assistenzsystem zum Betrieb in einer technischen Anlage weiterzubilden.

Die Aufgabe wird durch ein mobiles Assistenzsystem mit den in Anspruch 1 angegebenen Merkmalen gelöst. Vorteilhafte Ausgestaltungen und Weiterbildungen sind Gegenstand der Unteransprüche.

Ein erfindungsgemäßes mobiles Assistenzsystem zum Betrieb in einer technischen Anlage umfasst eine Antriebseinrichtung zur Bewegung des mobilen Assistenzsystems in der technischen Anlage, eine Steuereinheit zur Steuerung der Antriebseinrichtung und eine Kommunikationseinheit zur drahtlosen Kommunikation. Das erfindungsgemäße mobile Assistenzsystem umfasst ferner einen Lokalisierungssensor zur Erfassung eines Menschen, einen Temperatursensor zur Erfassung einer Umgebungstemperatur und einen Infrarotstrahler zur Abgabe von Strahlungswärme.

Bei der technischen Anlage handelt es sich beispielsweise um eine industrielle Anwendung, beispielsweise ein Produktionswerk, eine Industriehalle oder ein Logistikzentrum. Bei dem mobilen Assistenzsystem handelt es sich insbesondere um ein autonomes System. Im Betrieb erhält das mobile Assistenzsystem beispielsweise über die Kommunikationseinheit einen Auftrag, einen Menschen zu erfassen und diesem zu folgen. Das autonome mobile Assistenzsystem erfasst den Menschen mit dem Lokalisierungssensor und folgt dem erfassten Menschen selbstständig, wenn dieser sich in der technischen Anlage bewegt. Dazu steuert die Steuereinheit die Antriebseinrichtung entsprechend an. Dabei erfasst das mobile Assistenzsystem die Umgebungstemperatur mit dem Temperatursensor. Wenn die Umgebungstemperatur einen Grenzwert, beispielsweise 20° C, unterschreitet, so gibt das mobile Assistenzsystem mit dem Infrarotstrahler Strahlungswärme in Richtung des erfassten Menschen ab. Der Mensch empfindet die Strahlungswärme als angenehm, obwohl die Umgebungstemperatur niedrig ist.

Durch den Betrieb des erfindungsgemäßen mobilen Assistenzsystems in der technischen Anlage ist es somit nicht erforderlich, die Umgebungstemperatur in der gesamten technischen Anlage zu erhöhen. Es ist ausreichend, lokal Strahlungswärme abzugeben, wo sich Menschen aufhalten. Dadurch werden Heizkosten in der technischen Anlage eingespart, und die Betriebskosten der technischen Anlage werden verringert.

Gemäß einer bevorzugten Ausgestaltung der Erfindung umfasst das mobile Assistenzsystem eine erste Antriebseinheit zum rotatorischen und/oder translatorischen Antrieb des Infrarotstrahlers. Dadurch ist die Ausrichtung des Infrarotstrahlers auf den erfassten Menschen vereinfacht, und die Strahlungswärme ist präzise in Richtung des erfassten Menschen abgebbar.

Gemäß einer vorteilhaften Weiterbildung der Erfindung umfasst das mobile Assistenzsystem eine Beleuchtungseinheit zur Beleuchtung eines Teils einer Umgebung. Während das autonome mobile Assistenzsystem dem erfassten Menschen folgt, beleuchtet das mobile Assistenzsystem mit der Beleuchtungseinheit die Umgebung des erfassten Menschen. Eine Beleuchtung der gesamten technischen Anlage ist somit nicht erforderlich. Es ist ausreichend, lokal zu beleuchten, wo sich Menschen aufhalten. Dadurch werden Beleuchtungskosten in der technischen Anlage eingespart, und die Betriebskosten der technischen Anlage werden verringert.

Gemäß einer bevorzugten Ausgestaltung der Erfindung umfasst das mobile Assistenzsystem eine zweite Antriebseinheit zum rotatorischen und/oder translatorischen Antrieb der Beleuchtungseinheit. Dadurch ist die Ausrichtung der Beleuchtungseinheit in Richtung auf den erfassten Menschen hin vereinfacht.

Gemäß einer vorteilhaften Ausgestaltung der Erfindung ist das mobile Assistenzsystem als Landfahrzeug ausgebildet. Dabei umfasst die Antriebseinrichtung Antriebsräder zur Bewegung auf einem Boden, mindestens einen Elektromotor zum Antrieb der Antriebsräder und einen elektrischen Energiespeicher zur Versorgung des mindestens eines Elektromotors. Das mobile Assistenzsystem ist somit als autonom fahrendes Fahrzeug ausgebildet und fährt auf dem Boden der technischen Anlage, auf welchem sich auch der erfasste Mensch befindet. Das mobile Assistenzsystem ist dadurch verhältnismäßig flexibel in der technischen Anlage beweglich.

Gemäß einer vorteilhaften Ausgestaltung der Erfindung ist das mobile Assistenzsystem als Schienenfahrzeug ausgebildet. Dabei umfasst die Antriebseinrichtung Laufräder zur Bewegung entlang einer Laufschiene. Das mobile Assistenzsystem fährt somit entlang der Laufschiene in der technischen Anlage. Das mobile Assistenzsystem ist dadurch verhältnismäßig leicht und platzsparend und hat selbst nur einen verhältnismäßig geringen Energiebedarf.

Gemäß einer vorteilhaften Ausgestaltung der Erfindung ist das mobile Assistenzsystem als Luftfahrzeug ausgebildet. Dabei umfasst die Antriebseinrichtung mindestens einen Rotor zur Erzeugung eines Auftriebs und zur Bewegung in der Luft, mindestens einen Elektromotor zum Antrieb des mindestens eines Rotors und einen elektrischen Energiespeicher zur Versorgung des mindestens eines Elektromotors. Das mobile Assistenzsystem ist beispielsweise in Form einer Drohne, eines Hubschraubers oder eines Multicopters ausgebildet. Das mobile Assistenzsystem fliegt durch die technische Anlage, in welcher sich auch der erfasste Mensch befindet. Das mobile Assistenzsystem ist dadurch verhältnismäßig flexibel in der technischen Anlage beweglich.

Gemäß einer vorteilhaften Ausgestaltung der Erfindung umfasst das mobile Assistenzsystem eine Empfangseinheit zur kontaktlosen Aufnahme von Energie. Zu der Empfangseinheit ist Energie insbesondere induktiv von einer Ladeeinheit übertragbar. Die Ladeeinheit ist beispielsweise als Linienleiter oder als Ladepunkt mit einer Spule ausgebildet und befindet sich stationär in dem Boden der technischen Anlage, auf welchem sich das mobile Assistenzsystem bewegt. Beispielsweise ist die Ladeeinheit auch in einer Laufschiene oder an einer Decke in der technischen Anlage angeordnet. Die Empfangseinheit weist beispielsweise eine Spule auf, die mit der Ladeeinheit induktiv koppelbar ist. Somit ist Energie kontaktlos zu dem mobilen Assistenzsystem übertragbar. Die von der Ladeeinheit zu der Empfangseinheit induktiv übertragene Energie dient insbesondere zum Laden eines elektrischen Energiespeichers des mobilen Assistenzsystems.

Gemäß einer vorteilhaften Ausgestaltung der Erfindung umfasst das mobile Assistenzsystem einen Stromabnehmer zur kontaktbehafteten Aufnahme von Energie. Zu dem Stromabnehmer ist Energie von einer Versorgungseinheit übertragbar. Die Versorgungseinheit umfasst beispielsweise zwei Versorgungsleiter mit entsprechenden Kontakten, zwischen denen eine Versorgungsspannung anliegt. Die Versorgungseinheit und ist stationär an dem Boden, an einer Laufschiene oder an einer Decke in der technischen Anlage angeordnet. Somit ist Energie kontaktbehaftet zu dem mobilen Assistenzsystem übertragbar. Die von der Versorgungseinheit zu dem Stromabnehmer übertragene Energie dient insbesondere zum Laden eines elektrischen Energiespeichers des mobilen Assistenzsystems.

Gemäß einer vorteilhaften Ausgestaltung der Erfindung ist der Lokalisierungssensor als Laserscanner oder als Infrarot-Kamera oder als 3D-Kamera ausgebildet. Ein Laserscanner sendet einen Laserstrahl aus, detektiert einen reflektierten Laserstrahl und erfasst somit ein Ziel, beispielsweise einen Menschen, welcher den Laserstrahl reflektiert. Ein Laserscanner ist in bekannten mobilen Assistenzsystemen bereits vorhanden, es fallen somit keine zusätzlichen Kosten für die Installation eines weiteren Laserscanners an. Eine 3D-Kamera erfasst optisch ein Ziel, beispielsweise einen Menschen. Eine Infrarot-Kamera erfasst ein Ziel, beispielsweise einen Menschen durch Detektion von Wärmestrahlung, die das Ziel aussendet.

Gemäß einer vorteilhaften Weiterbildung der Erfindung ist der Lokalisierungssensor dazu eingerichtet ist, eine Position eines Körpers eines erfassten Menschen und/oder einen Schwerpunkts eines Körpers eines erfassten Menschen zu erkennen.

Gemäß einer vorteilhaften Weiterbildung der Erfindung der Lokalisierungssensor dazu eingerichtet ist, eine Vorderseite eines Körpers eines erfassten Menschen und/oder eine Blickrichtung eines erfassten Menschen zu erkennen.

Gemäß einer vorteilhaften Ausgestaltung der Erfindung weist die Kommunikationseinheit eine steuerbare Lichtquelle und einen lichtsensitiven Sensor auf. Somit ist eine drahtlose Kommunikation des mobilen Assistenzsystems mittels Licht mit einem anderen mobilen Assistenzsystem, mit einer stationären Kommunikationsvorrichtung in der technischen Anlage oder auch mit einer mobilen Kommunikationsvorrichtung, wie beispielsweise einem Mobiltelefon ermöglicht. Eine Kommunikation mittels Licht ist weniger störanfällig als eine Kommunikation über WLAN oder Bluetooth.

Gemäß einer vorteilhaften Weiterbildung der Erfindung umfasst das mobile Assistenzsystem einen Positionssensor zur Erfassung einer Position des mobilen Assistenzsystems innerhalb der technischen Anlage. Bei dem besagten Positionssensor handelt es sich beispielsweis um einen GPS-Empfänger oder um ein SLAM-System. Mittels des Positionssensors kann die aktuelle Position des mobilen Assistenzsystems ständig erfasst und mittels der Kommunikationseinheit zu einem Server übertragen werden.

Gemäß einer vorteilhaften Ausgestaltung der Erfindung umfasst das mobile Assistenzsystem einen Abstandssensor zur Bestimmung eines Abstandes zwischen einem von dem Lokalisierungssensor erfassten Menschen und dem mobilen Assistenzsystem. Ferner weist die Steuereinheit einen Abstandsregler auf, welcher dazu eingerichtet ist, die Antriebseinrichtung derart anzusteuern, dass ein Abstand zwischen dem von dem Lokalisierungssensor erfassten Menschen und dem mobilen Assistenzsystem auf einen Sollwert geregelt wird.

Eine technische Anlage umfasst mindestens ein erfindungsgemäßes mobiles Assistenzsystem. Die erfindungsgemäße technische Anlage zeichnet sich durch verringerte Betriebskosten, insbesondere durch Einsparung von Heizkosten, aus.

Gemäß einem Verfahren zum Betreiben einer erfindungsgemäßen technischen Anlage ist vorgesehen, dass der Lokalisierungssensor des mobilen Assistenzsystems einen Menschen erfasst. Die Steuereinheit des mobilen Assistenzsystems steuert die Antriebseinrichtung des mobilen Assistenzsystems derart an, dass das mobile Assistenzsystem dem erfassten Menschen folgt. Der Temperatursensor des mobilen Assistenzsystems erfasst eine Umgebungstemperatur. Wenn die Umgebungstemperatur einen Grenzwert beispielsweise 20° C, unterschreitet, so gibt der Infrarotstrahler des mobilen Assistenzsystems Strahlungswärme in Richtung des erfassten Menschen ab.

Der Mensch empfindet die von dem Infrarotstrahler abgegebene Strahlungswärme als angenehm, obwohl die Umgebungstemperatur niedrig ist. Es ist somit nicht erforderlich, die Umgebungstemperatur in der gesamten technischen Anlage zu erhöhen. Es ist ausreichend, lokal Strahlungswärme abzugeben, wo sich Menschen aufhalten. Dadurch werden Heizkosten in der technischen Anlage eingespart, und die Betriebskosten der technischen Anlage werden signifikant verringert.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung eines mobilen Assistenzsystems gemäß einer ersten Ausführungsform in einer technischen Anlage und
- Figur 2:: eine schematische Darstellung eines mobilen Assistenzsystems gemäß einer zweiten Ausführungsform in einer technischen Anlage.

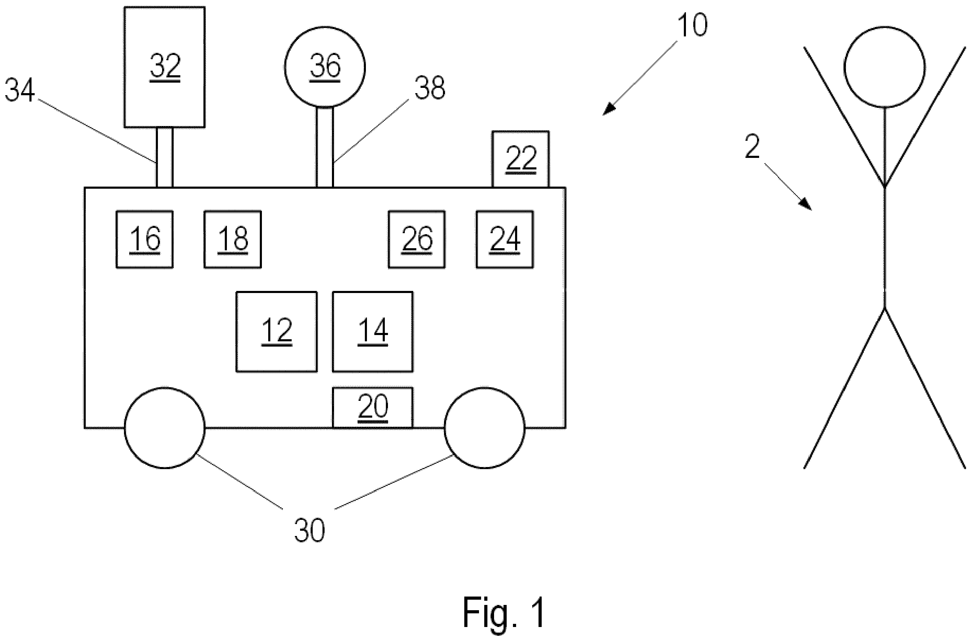

Figur 1 zeigt eine schematische Darstellung eines mobilen Assistenzsystems 10 gemäß einer ersten Ausführungsform in einer technischen Anlage. Bei der technischen Anlage handelt es sich um eine industrielle Anwendung, beispielsweise ein Produktionswerk, eine Industriehalle oder ein Logistikzentrum.

Das mobile Assistenzsystem 10 gemäß der ersten Ausführungsform ist als autonom fahrendes Landfahrzeug ausgebildet. In der hier gezeigten Darstellung befindet sich das mobile Assistenzsystem 10 auf einem ebenen Boden der technischen Anlage. Ein Mensch 2 befindet sich neben dem mobilen Assistenzsystem 10 auf dem Boden der technischen Anlage. Eine Vertikalrichtung verläuft rechtwinklig zu dem Boden. Eine Horizontalrichtung verläuft parallel zu dem Boden und rechtwinklig zu der Vertikalrichtung.

Das mobile Assistenzsystem 10 umfasst eine Antriebseinrichtung zur Bewegung des mobilen Assistenzsystems 10 in der technischen Anlage in Horizontalrichtung. Die Antriebseinrichtung umfasst Antriebsräder 30 zur Bewegung auf dem Boden, mehrere Elektromotoren 12 zum Antrieb der Antriebsräder 30 und einen elektrischen Energiespeicher 14 zur Versorgung der Elektromotoren 12 mit elektrischer Energie. Das mobile Assistenzsystem 10 umfasst ferner eine Steuereinheit 18 zur Steuerung der Antriebseinrichtung 12. Die Elektromotoren 12 treiben die Antriebsräder 30 über Getriebe an.

Auch umfasst das mobile Assistenzsystem 10 eine Empfangseinheit 20 zur kontaktlosen Aufnahme von Energie. Die Empfangseinheit 20 weist dazu eine Spule auf, die mit einer Ladeeinheit induktiv koppelbar ist. Die Ladeeinheit ist beispielsweise als Linienleiter oder als Ladepunkt mit einer Spule ausgebildet und befindet sich stationär in dem Boden der technischen Anlage. Somit ist Energie kontaktlos und induktiv von der Ladeeinheit zu der Empfangseinheit 20 des mobilen Assistenzsystems 10 übertragbar. Die von der Empfangseinheit 20 aufgenommene Energie dient insbesondere zum Laden des elektrischen Energiespeichers 14.

Ferner umfasst das mobile System 10 eine Kommunikationseinheit 16 zur drahtlosen Kommunikation. Die Kommunikationseinheit 16 weist eine steuerbare Lichtquelle und einen lichtsensitiven Sensor als Kommunikationsmittel auf. Es ist auch denkbar, dass die Kommunikationseinheit 16 beispielsweise eine WLAN-Antenne oder eine Bluetooth-Antenne aufweist.

Das mobile Assistenzsystem 10 umfasst ferner einen Positionssensor 26 zur Erfassung einer Position des mobilen Assistenzsystems 10 innerhalb der technischen Anlage. Bei dem besagten Positionssensor 26 handelt es sich beispielsweis um einen GPS-Empfänger oder um ein SLAM-System.

Das mobile Assistenzsystem 10 umfasst einen Lokalisierungssensor 22 zur Erfassung eines Menschen 2. Der Lokalisierungssensor 22 ist vorliegend als Laserscanner ausgebildet. Es ist auch denkbar, dass der Lokalisierungssensor 22 als 3D-Kamera oder als Infrarot-Kamera ausgebildet ist. Der Lokalisierungssensor 22 ist dazu eingerichtet, den Menschen 2 zu erfassen. Mittels der Lokalisierungssensors 22 ist eine verhältnismäßig exakte Lokalisierung des Menschen 2 möglich.

Das mobile Assistenzsystem 10 umfasst einen Temperatursensor 24 zur Erfassung einer Umgebungstemperatur innerhalb der technischen Anlage.

Das mobile Assistenzsystem 10 umfasst einen Infrarotstrahler 32 zur Abgabe von Strahlungswärme. Das mobile Assistenzsystem 10 umfasst auch eine erste Antriebseinheit 34 zum rotatorischen sowie zum translatorischen Antrieb des Infrarotstrahlers 32. Mittels der ersten Antriebseinheit 34 ist der Infrarotstrahler 32 in Vertikalrichtung beweglich. Mittels der ersten Antriebseinheit 34 ist der Infrarotstrahler 32 auch um eine in Vertikalrichtung verlaufende Achse drehbar. Mittels der ersten Antriebseinheit 34 ist der Infrarotstrahler 32 ferner um eine in Horizontalrichtung verlaufende Achse schwenkbar.

Das mobile Assistenzsystem 10 umfasst eine Beleuchtungseinheit 36 zur Beleuchtung eines Teils einer Umgebung. Das mobile Assistenzsystem 10 umfasst auch eine zweite Antriebseinheit 38 zum rotatorischen sowie zum translatorischen Antrieb der Beleuchtungseinheit 36. Mittels der zweiten Antriebseinheit 38 ist die Beleuchtungseinheit 36 in Vertikalrichtung beweglich. Mittels der zweiten Antriebseinheit 36 ist die Beleuchtungseinheit 36 auch um eine in Vertikalrichtung verlaufende Achse drehbar. Mittels der zweiten Antriebseinheit 36 ist die Beleuchtungseinheit 36 ferner um eine in Horizontalrichtung verlaufende Achse schwenkbar.

Im Betrieb erhält das mobile Assistenzsystem 10 gemäß der ersten Ausführungsform über die Kommunikationseinheit 16 einen Auftrag, einen Menschen 2 zu erfassen und diesem zu folgen. Das mobile Assistenzsystem 10 erfasst den Menschen 2 mit dem Lokalisierungssensor 22 und folgt dem erfassten Menschen 2 selbstständig, wenn dieser sich in der technischen Anlage bewegt. Wenn der Mensch 2 an einem Ort stehen bleibt, so verbleibt auch das mobile Assistenzsystem 10 neben dem Menschen 2. Dazu steuert die Steuereinheit 18 die Antriebseinrichtung entsprechend an.

Das mobile Assistenzsystem 10 erfasst dabei die Umgebungstemperatur in der technischen Anlage mit dem Temperatursensor 24. Wenn die erfasste Umgebungstemperatur einen Grenzwert von 20° C unterschreitet, so gibt das mobile Assistenzsystem 10 mit dem Infrarotstrahler 32 Strahlungswärme in Richtung des erfassten Menschen 2 ab. Ferner beleuchtet das mobile Assistenzsystem 10 mit der Beleuchtungseinheit 36 die Umgebung des erfassten Menschen 2.

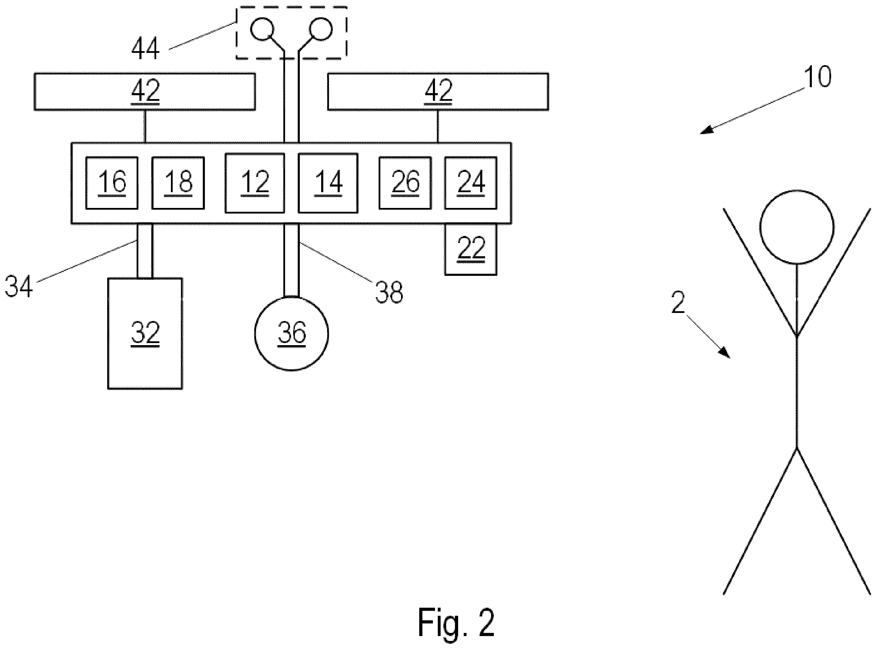

Figur 2 zeigt eine schematische Darstellung eines mobilen Assistenzsystems 10 gemäß einer zweiten Ausführungsform in einer technischen Anlage. Bei der technischen Anlage handelt es sich um eine industrielle Anwendung, beispielsweise ein Produktionswerk, eine Industriehalle oder ein Logistikzentrum.

Das mobile Assistenzsystem 10 gemäß der zweiten Ausführungsform ist als autonom fliegendes Luftfahrzeug ausgebildet. Alternativ ist das mobile Assistenzsystem 10 über eine Fernsteuerung steuerbar. Das mobile Assistenzsystem 10 ist beispielsweise in Form einer Drohne, eines Hubschraubers oder eines Multicopters ausgebildet und fliegt durch die technische Anlage, in welcher sich auch der erfasste Mensch 2 befindet.

In der hier gezeigten Darstellung befindet sich das mobile Assistenzsystem 10 über einem ebenen Boden der technischen Anlage. Ein Mensch 2 befindet sich neben dem mobilen Assistenzsystem 10 auf dem Boden der technischen Anlage. Eine Vertikalrichtung verläuft rechtwinklig zu dem Boden. Eine Horizontalrichtung verläuft parallel zu dem Boden und rechtwinklig zu der Vertikalrichtung.

Das mobile Assistenzsystem 10 umfasst eine Antriebseinrichtung zur Bewegung des mobilen Assistenzsystems 10 in der technischen Anlage in Horizontalrichtung und in Vertikalrichtung. Die Antriebseinrichtung umfasst mehrere Rotoren 42 zur Erzeugung eines Auftriebs in Vertikalrichtung und zur Bewegung in der Luft in Horizontalrichtung. Das mobile Assistenzsystem 10 umfasst mehrere Elektromotoren 12 zum Antrieb der Rotoren 42 und einen elektrischen Energiespeicher 14 zur Versorgung der Elektromotoren 12 mit elektrischer Energie. Das mobile Assistenzsystem 10 umfasst ferner eine Steuereinheit 18 zur Steuerung der Antriebseinrichtung 12. Die Elektromotoren 12 treiben die Rotoren 42 über Getriebe an.

Auch umfasst das mobile Assistenzsystem 10 einen Stromabnehmer 44 zur kontaktbehafteten Aufnahme von Energie. Der Stromabnehmer 20 weist dazu zwei Klemmen auf, die mit Kontakten einer Versorgungseinheit koppelbar sind. Die Versorgungseinheit umfasst beispielsweise zwei Versorgungsleiter mit entsprechenden Kontakten, zwischen denen eine Versorgungsspannung anliegt. Die Versorgungseinheit ist vorliegend an einer Decke in der technischen Anlage angeordnet. Somit ist Energie kontaktbehaftet von der Versorgungseinheit zu dem Stromabnehmer 44 des mobilen Assistenzsystems 10 übertragbar. Die von dem Stromabnehmer 44 aufgenommene Energie dient insbesondere zum Laden des elektrischen Energiespeichers 14.

Ferner umfasst das mobile System 10 eine Kommunikationseinheit 16 zur drahtlosen Kommunikation. Die Kommunikationseinheit 16 weist eine steuerbare Lichtquelle und einen lichtsensitiven Sensor als Kommunikationsmittel auf. Es ist auch denkbar, dass die Kommunikationseinheit 16 beispielsweise eine WLAN-Antenne oder eine Bluetooth-Antenne aufweist.

Das mobile Assistenzsystem 10 umfasst ferner einen Positionssensor 26 zur Erfassung einer Position des mobilen Assistenzsystems 10 innerhalb der technischen Anlage. Bei dem besagten Positionssensor 26 handelt es sich beispielsweis um einen GPS-Empfänger oder um ein SLAM-System.

Das mobile Assistenzsystem 10 umfasst einen Lokalisierungssensor 22 zur Erfassung eines Menschen 2. Der Lokalisierungssensor 22 ist vorliegend als Laserscanner ausgebildet. Es ist auch denkbar, dass der Lokalisierungssensor 22 als 3D-Kamera oder als Infrarot-Kamera ausgebildet ist. Der Lokalisierungssensor 22 ist dazu eingerichtet, den Menschen 2 zu erfassen. Mittels der Lokalisierungssensors 22 ist eine verhältnismäßig exakte Lokalisierung des Menschen 2 möglich.

Das mobile Assistenzsystem 10 umfasst einen Temperatursensor 24 zur Erfassung einer Umgebungstemperatur innerhalb der technischen Anlage.

Das mobile Assistenzsystem 10 umfasst einen Infrarotstrahler 32 zur Abgabe von Strahlungswärme. Das mobile Assistenzsystem 10 umfasst auch eine erste Antriebseinheit 34 zum rotatorischen sowie zum translatorischen Antrieb des Infrarotstrahlers 32. Mittels der ersten Antriebseinheit 34 ist der Infrarotstrahler 32 in Vertikalrichtung beweglich. Mittels der ersten Antriebseinheit 34 ist der Infrarotstrahler 32 auch um eine in Vertikalrichtung verlaufende Achse drehbar. Mittels der ersten Antriebseinheit 34 ist der Infrarotstrahler 32 ferner um eine in Horizontalrichtung verlaufende Achse schwenkbar.

Das mobile Assistenzsystem 10 umfasst eine Beleuchtungseinheit 36 zur Beleuchtung eines Teils einer Umgebung. Das mobile Assistenzsystem 10 umfasst auch eine zweite Antriebseinheit 38 zum rotatorischen sowie zum translatorischen Antrieb der Beleuchtungseinheit 36. Mittels der zweiten Antriebseinheit 38 ist die Beleuchtungseinheit 36 in Vertikalrichtung beweglich. Mittels der zweiten Antriebseinheit 36 ist die Beleuchtungseinheit 36 auch um eine in Vertikalrichtung verlaufende Achse drehbar. Mittels der zweiten Antriebseinheit 36 ist die Beleuchtungseinheit 36 ferner um eine in Horizontalrichtung verlaufende Achse schwenkbar.

Im Betrieb erhält das mobile Assistenzsystem 10 gemäß der zweiten Ausführungsform über die Kommunikationseinheit 16 einen Auftrag, einen Menschen 2 zu erfassen und diesem zu folgen. Das mobile Assistenzsystem 10 erfasst den Menschen 2 mit dem Lokalisierungssensor 22 und folgt dem erfassten Menschen 2 selbstständig, wenn dieser sich in der technischen Anlage bewegt. Dazu steuert die Steuereinheit 18 die Antriebseinrichtung entsprechend an.

Wenn der Mensch 2 an einem Ort stehen bleibt, so verbleibt auch das mobile Assistenzsystem 10 neben dem Menschen 2. Es ist denkbar, dass das mobile Assistenzsystem 10 dabei in der Luft stehen bleibt, indem die Rotoren 42 weiterhin Auftrieb in Vertikalrichtung erzeugen. Nach Möglichkeit fliegt das mobile Assistenzsystem 10 jedoch zu einem dafür vorgesehenen Ruheplatz und verbleibt dort, bis der Mensch 2 sich weiterbewegt. Der Ruheplatz ist beispielsweise als eine Plattform ausgebildet, auf welcher das mobile Assistenzsystem 10 landet. Alternativ ist der Ruheplatz beispielsweise als Schiene ausgebildet, an welcher das mobile Assistenzsystem 10 mittels einer hier nicht dargestellten Rasteinheit verrastet. Eine solche Schiene ist beispielsweise an der Decke der technischen Anlage befestigt. An dem Ruheplatz befindet sich vorzugsweise auch eine Versorgungseinheit zur Abgabe von elektrischer Energie an den Stromabnehmer 44 des mobilen Assistenzsystems 10.

Das mobile Assistenzsystem 10 erfasst dabei die Umgebungstemperatur in der technischen Anlage mit dem Temperatursensor 24. Wenn die erfasste Umgebungstemperatur einen Grenzwert von 20° C unterschreitet, so gibt das mobile Assistenzsystem 10 mit dem Infrarotstrahler 32 Strahlungswärme in Richtung des erfassten Menschen 2 ab. Ferner beleuchtet das mobile Assistenzsystem 10 mit der Beleuchtungseinheit 36 die Umgebung des erfassten Menschen 2.

### Bezugszeichenliste

- 2: Mensch
- 10: Mobiles Assistenzsystem
- 12: Elektromotor
- 14: Energiespeicher
- 16: Kommunikationseinheit
- 18: Steuereinheit
- 20: Empfangseinheit
- 22: Lokalisierungssensor
- 24: Temperatursensor
- 26: Positionssensor
- 30: Antriebsrad
- 32: Infrarotstrahler
- 34: erste Antriebseinheit
- 36: Beleuchtungseinheit
- 38: zweite Antriebseinheit
- 42: Rotor
- 44: Stromabnehmer

## Patentansprüche

1. Mobiles Assistenzsystem (10) zum Betrieb in einer technischen Anlage, umfassend
eine Antriebseinrichtung zur Bewegung des mobilen Assistenzsystems (10) in der technischen Anlage,
eine Steuereinheit (18) zur Steuerung der Antriebseinrichtung (12) und
eine Kommunikationseinheit (16) zur drahtlosen Kommunikation,
**dadurch gekennzeichnet, dass**
das mobile Assistenzsystem (10)
einen Lokalisierungssensor (22) zur Erfassung eines Menschen (2),
einen Temperatursensor (24) zur Erfassung einer Umgebungstemperatur und
einen Infrarotstrahler (32) zur Abgabe von Strahlungswärme umfasst, und dass
das autonome mobile Assistenzsystem (10) im Betrieb dazu eingerichtet ist, den Menschen (2) mit dem Lokalisierungssensor (22) zu erfassen, und dass das mobile Assistenzsystem (10) im Betrieb dazu eingerichtet ist, die Umgebungstemperatur mit dem Temperatursensor (24) zu erfassen, und dass wenn die Umgebungstemperatur einen Grenzwert unterschreitet, das mobile Assistenzsystem dazu eingerichtet ist, (10) mit dem Infrarotstrahler (32) Strahlungswärme in Richtung des erfassten Menschen (2) abzugeben.

2. Mobiles Assistenzsystem (10) nach Anspruch 1, **dadurch gekennzeichnet, dass**
das mobile Assistenzsystem (10) eine erste Antriebseinheit (34) zum rotatorischen und/oder translatorischen Antrieb des Infrarotstrahlers (32) umfasst.

3. Mobiles Assistenzsystem (10) nach einem der vorangegangenen Ansprüche,
**dadurch gekennzeichnet, dass**
das mobile Assistenzsystem (10) eine Beleuchtungseinheit (36) zur Beleuchtung eines Teils einer Umgebung und
eine zweite Antriebseinheit (38) zum rotatorischen und/oder translatorischen Antrieb der Beleuchtungseinheit (36) umfasst.

4. Mobiles Assistenzsystem (10) nach einem der vorangegangenen Ansprüche,
**dadurch gekennzeichnet, dass**
das mobile Assistenzsystem (10) als Landfahrzeug ausgebildet ist, und dass
die Antriebseinrichtung Antriebsräder (30) zur Bewegung auf einem Boden,
mindestens einen Elektromotor (12) zum Antrieb der Antriebsräder (30) und
einen elektrischen Energiespeicher (14) zur Versorgung des mindestens einen Elektromotors (12) umfasst.

5. Mobiles Assistenzsystem (10) nach einem der vorangegangenen Ansprüche,
**dadurch gekennzeichnet, dass**
das mobile Assistenzsystem (10) als Schienenfahrzeug ausgebildet ist, und dass die Antriebseinrichtung Laufräder zur Bewegung entlang einer Laufschiene umfasst.

6. Mobiles Assistenzsystem (10) nach einem der vorangegangenen Ansprüche,
**dadurch gekennzeichnet, dass**
das mobile Assistenzsystem (10) als Luftfahrzeug ausgebildet ist, und dass
die Antriebseinrichtung mindestens einen Rotor (42) zur Erzeugung eines Auftriebs und zur Bewegung in der Luft,
mindestens einen Elektromotor (12) zum Antrieb des mindestens einen Rotors (42) und
einen elektrischen Energiespeicher (14) zur Versorgung des mindestens einen Elektromotors (12) umfasst.

7. Mobiles Assistenzsystem (10) nach einem der vorangegangenen Ansprüche,
**dadurch gekennzeichnet, dass**
das mobile Assistenzsystem (10) eine Empfangseinheit (20) zur kontaktlosen Aufnahme von Energie und/oder
einen Stromabnehmer (44) zur kontaktbehafteten Aufnahme von Energie umfasst.

8. Mobiles Assistenzsystem (10) nach einem der vorangegangenen Ansprüche,
**dadurch gekennzeichnet, dass**
der Lokalisierungssensor (22) als Laserscanner oder als Infrarot-Kamera oder als 3D-Kamera ausgebildet ist.

9. Mobiles Assistenzsystem (10) nach einem der vorangegangenen Ansprüche,
**dadurch gekennzeichnet, dass**
der Lokalisierungssensor (22) dazu eingerichtet ist, eine Position eines Körpers eines erfassten Menschen und/oder einen Schwerpunkts eines Körpers eines erfassten Menschen zu erkennen.

10. Mobiles Assistenzsystem (10) nach einem der vorangegangenen Ansprüche,
**dadurch gekennzeichnet, dass**
der Lokalisierungssensor (22) dazu eingerichtet ist, eine Vorderseite eines Körpers eines erfassten Menschen und/oder eine Blickrichtung eines erfassten Menschen zu erkennen.

11. Mobiles Assistenzsystem (10) nach einem der vorangegangenen Ansprüche,
**dadurch gekennzeichnet, dass**
die Kommunikationseinheit (16) eine steuerbare Lichtquelle und einen lichtsensitiven Sensor aufweist.

12. Mobiles Assistenzsystem (10) nach einem der vorangegangenen Ansprüche,
**dadurch gekennzeichnet, dass**
das mobile Assistenzsystem (10) einen Positionssensor (26) zur Erfassung einer Position des mobilen Assistenzsystems (10) innerhalb der technischen Anlage umfasst.

13. Mobiles Assistenzsystem (10) nach einem der vorangegangenen Ansprüche,
**dadurch gekennzeichnet, dass**
das mobile Assistenzsystem (10) einen Abstandssensor zur Bestimmung eines Abstandes zwischen einem von dem Lokalisierungssensor (22) erfassten Menschen (2) und dem mobilen Assistenzsystem (10) umfasst, und dass
die Steuereinheit (18) einen Abstandsregler aufweist, welcher dazu eingerichtet ist, die Antriebseinrichtung (12) derart anzusteuern, dass ein Abstand zwischen dem von dem Lokalisierungssensor (22) erfassten Menschen (2) und dem mobilen Assistenzsystem (10) auf einen Sollwert geregelt wird.

## Claims

1. Mobile assistance system (10) for operation in a technical facility, comprising a drive apparatus for moving the mobile assistance system (10) in the technical facility, a control unit (18) for controlling the drive apparatus (12), and a communication unit (16) for wireless communication,
**characterised in that**
the mobile assistance system (10) comprises a locating sensor (22) for detecting a person (2), a temperature sensor (24) for detecting an ambient temperature and an infrared radiator (32) for emitting radiant heat, and **in that**
the autonomous mobile assistance system (10), when in operation, is set up to detect the person (2) using the locating sensor (22), and **in that**
the mobile assistance system (10), when in operation, is set up to detect the ambient temperature using the temperature sensor (24), and **in that**
when the ambient temperature drops below a limit value, the mobile assistance system (10) is set up to emit radiant heat towards the detected person (2) using the infrared radiator (32).

2. Mobile assistance system (10) according to claim 1,
**characterised in that**
the mobile assistance system (10) comprises a first drive unit (34) for driving the infrared radiator (32) in a rotational and/or translatory manner.

3. Mobile assistance system (10) according to any of the preceding claims,
**characterised in that**
the mobile assistance system (10) comprises an illumination unit (36) for illuminating part of an environment and a second drive unit (38) for driving the illumination unit (36) in a rotational and/or translatory manner.

4. Mobile assistance system (10) according to any of the preceding claims,
**characterised in that**
the mobile assistance system (10) is configured as a land-based vehicle, and **in that** the drive apparatus comprises driving wheels (30) for moving on a floor, at least one electric motor (12) for driving the driving wheels (30) and an electrical energy store (14) for powering the at least one electric motor (12).

5. Mobile assistance system (10) according to any of the preceding claims,
**characterised in that**
the mobile assistance system (10) is configured as a rail-borne vehicle, and **in that** the drive apparatus comprises wheels for moving along a running rail.

6. Mobile assistance system (10) according to any of the preceding claims,
**characterised in that**
the mobile assistance system (10) is configured as an aerial vehicle, and **in that** the drive apparatus comprises at least one rotor (42) for generating lift and for moving in the air, at least one electric motor (12) for driving the at least one rotor (42) and an electrical energy store (14) for powering the at least one electric motor (12).

7. Mobile assistance system (10) according to any of the preceding claims,
**characterised in that**
the mobile assistance system (10) comprises a receiving unit (20) for absorbing energy contactlessly and/or a current collector (44) for absorbing energy through contact.

8. Mobile assistance system (10) according to any of the preceding claims,
**characterised in that**
the locating sensor (22) is configured as a laser scanner, an infrared camera or a 3D camera.

9. Mobile assistance system (10) according to any of the preceding claims,
**characterised in that**
the locating sensor (22) is set up to identify a position of a body of a detected person and/or a centre of gravity of a body of a detected person.

10. Mobile assistance system (10) according to any of the preceding claims,
**characterised in that**
the locating sensor (22) is set up to identify a front of a body of a detected person and/or a viewing direction of a detected person.

11. Mobile assistance system (10) according to any of the preceding claims,
**characterised in that**
the communication unit (16) has a controllable light source and a light-sensitive sensor.

12. Mobile assistance system (10) according to any of the preceding claims,
**characterised in that**
the mobile assistance system (10) comprises a position sensor (26) for detecting a position of the mobile assistance system (10) within the technical facility.

13. Mobile assistance system (10) according to any of the preceding claims,
**characterised in that**
the mobile assistance system (10) comprises a distance sensor for determining a distance between a person (2) detected by the locating sensor (22) and the mobile assistance system (10), and **in that**
the control unit (18) has a distance controller which is set up to actuate the drive apparatus (12) in such a way that a distance between the person (2) detected by the locating sensor (22) and the mobile assistance system (10) is controlled towards a setpoint.

## Revendications

1. Système mobile d'assistance (10) conçu pour fonctionner dans une installation technique, comprenant
un dispositif d'entraînement destiné à mouvoir ledit système mobile d'assistance (10) dans ladite installation technique,
une unité de commande (18) affectée au pilotage dudit dispositif d'entraînement (12), et
une unité de communication (16) dévolue à la communication sans fil,
**caractérisé par le fait que**
le système mobile d'assistance (10) inclut
un capteur de localisation (22) dédié à la détection d'une personne (2),
un capteur de température (24) affecté à la détection d'une température ambiante, et
un radiateur infrarouge (32) conçu pour délivrer de la chaleur rayonnante ; **par le fait que**
ledit système d'assistance (10) à mobilité autonome est agencé pour détecter la personne (2), en service, à l'aide du capteur de localisation (22) ; **par le fait que**
ledit système mobile d'assistance (10) est agencé pour détecter la température ambiante, en service, à l'aide du capteur de température (24) ; et **par le fait que**,
lorsque ladite température ambiante dépasse négativement une valeur limite, ledit système mobile d'assistance (10) est agencé pour délivrer, à l'aide du radiateur infrarouge (32), de la chaleur rayonnante en direction de la personne (2) détectée.

2. Système mobile d'assistance (10) selon la revendication 1, **caractérisé par le fait que** ledit système mobile d'assistance (10) inclut une première unité d'entraînement (34) dévolue à l'entraînement en rotation et/ou en translation du radiateur infrarouge (32).

3. Système mobile d'assistance (10) selon l'une des revendications précédentes, **caractérisé par le fait que**
ledit système mobile d'assistance (10) comprend une unité d'éclairage (36) conçue pour éclairer une partie d'un environnement, et
une seconde unité d'entraînement (38) dévolue à l'entraînement en rotation et/ou en translation de ladite unité d'éclairage (36).

4. Système mobile d'assistance (10) selon l'une des revendications précédentes, **caractérisé par le fait que**
ledit système mobile d'assistance (10) est réalisé en tant que véhicule terrestre ; et **par le fait que**
le dispositif d'entraînement comprend des roues motrices (30) dévolues à la mise en mouvement sur un sol,
au moins un moteur électrique (12) conçu pour entraîner lesdites roues motrices (30), et
un accumulateur d'énergie électrique (14) destiné à alimenter ledit moteur électrique (12) à présence minimale.

5. Système mobile d'assistance (10) selon l'une des revendications précédentes, **caractérisé par le fait que**
ledit système mobile d'assistance (10) est réalisé en tant que véhicule ferroviaire ; et **par le fait que**
le dispositif d'entraînement inclut des roues de roulement dévolues à la mise en mouvement le long d'un rail de roulement.

6. Système mobile d'assistance (10) selon l'une des revendications précédentes, **caractérisé par le fait que**
ledit système mobile d'assistance (10) est réalisé en tant qu'aéronef ; et **par le fait que**
le dispositif d'entraînement comprend au moins un rotor (42) dévolu à la génération d'une force ascensionnelle et à la mise en mouvement dans l'air,
au moins un moteur électrique (12) conçu pour entraîner ledit rotor (42) à présence minimale, et
un accumulateur d'énergie électrique (14) destiné à alimenter ledit moteur électrique (12) à présence minimale.

7. Système mobile d'assistance (10) selon l'une des revendications précédentes, **caractérisé par le fait que**
ledit système mobile d'assistance (10) comprend une unité réceptrice (20) dévolue à l'absorption d'énergie sans contact, et/ou
un collecteur de courant (44) dévolu à l'absorption d'énergie, tributaire de l'établissement d'un contact.

8. Système mobile d'assistance (10) selon l'une des revendications précédentes, **caractérisé par le fait que**
le capteur de localisation (22) est réalisé sous la forme d'un capteur laser ou d'une caméra infrarouge ou d'une caméra 3D.

9. Système mobile d'assistance (10) selon l'une des revendications précédentes, **caractérisé par le fait que**
le capteur de localisation (22) est agencé en vue d'identifier un emplacement d'un corps d'une personne détectée, et/ou un centre de gravité d'un corps d'une personne détectée.

10. Système mobile d'assistance (10) selon l'une des revendications précédentes, **caractérisé par le fait que**
le capteur de localisation (22) est agencé en vue d'identifier une face avant d'un corps d'une personne détectée, et/ou une direction de regard d'une personne détectée.

11. Système mobile d'assistance (10) selon l'une des revendications précédentes, **caractérisé par le fait que**
l'unité de communication (16) est munie d'une source de lumière pilotable et d'un capteur photosensible.

12. Système mobile d'assistance (10) selon l'une des revendications précédentes, **caractérisé par le fait que**
ledit système mobile d'assistance (10) inclut un capteur d'emplacements (26) dévolu à la détection d'un emplacement dudit système mobile d'assistance (10) à l'intérieur de l'installation technique.

13. Système mobile d'assistance (10) selon l'une des revendications précédentes, **caractérisé par le fait que**
ledit système mobile d'assistance (10) inclut un capteur de distances affecté à la détermination d'une distance comprise entre ledit système mobile d'assistance (10) et une personne (2) détectée par le capteur de localisation (22) ; et **par le fait que**
l'unité de commande (18) est dotée d'un régulateur de distances agencé pour piloter le dispositif d'entraînement (12) de façon telle qu'une distance, comprise entre ledit système mobile d'assistance (10) et ladite personne (2) détectée par le capteur de localisation (22), soit régulée sur une valeur de consigne.
